(19) Europäisches Patentamt / European Patent Office / Office européen des brevets

(11) EP 3 583 164 B1

(12) **EUROPEAN PATENT SPECIFICATION**

(45) Date of publication and mention of the grant of the patent:
**16.12.2020 Bulletin 2020/51**

(21) Application number: **18710546.5**

(22) Date of filing: **20.02.2018**

(51) Int Cl.:
***C08L 9/00*** *(2006.01)* ***B60C 1/00*** *(2006.01)*
***C08K 5/00*** *(2006.01)* ***C08L 21/00*** *(2006.01)*

(86) International application number:
**PCT/JP2018/005843**

(87) International publication number:
**WO 2018/151305 (23.08.2018 Gazette 2018/34)**

(54) **A TIRE COMPRISING A TREAD**

REIFEN MIT LAUFFLÄCHE

PNEUMATIQUE COMPRENANT UNE BANDE DE ROULEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.02.2017 PCT/JP2017/006099**

(43) Date of publication of application:
**25.12.2019 Bulletin 2019/52**

(73) Proprietor: **Compagnie Générale des Etablissements Michelin**
**63000 Clermont-Ferrand (FR)**

(72) Inventor: **MORIYAMA, Masahiko**
**Tokyo 163-1073 (JP)**

(74) Representative: **Regimbeau**
**20, rue de Chazelles**
**75847 Paris Cedex 17 (FR)**

(56) References cited:
**EP-A1- 2 042 346**
**WO-A1-2012/069565**
**WO-A1-2016/098908**
**US-A1- 2010 154 948**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 583 164 B1

## Description

### Technical Field

The field of the present invention is that of tires having treads suitable for snow tires or winter tires capable of rolling over ground surfaces covered with snow.

As is known, the snow tires classified in a category of use "snow", identified by an inscription the Alpine symbol ("3-peak-mountain with snowflake"), marked on their sidewalls, mean tires whose tread patterns, tread compounds and/or structures are primarily designed to achieve, in snow conditions, a performance better than that of normal tires intended for normal on-road use with regard to their abilities to initiate, maintain or stop vehicle motion.

### Background Art

In order to obtain satisfactory driving performance particularly on wet, snow-covered (snowy) or icy road surfaces, it is a known practice to provide a tire comprising a tread that comprises tread pattern elements delimited by cut-outs (grooves with an average width of greater than or equal to 2 mm and/or sipes (incisions), with an average width of less than 2 mm), these cut-outs being obtained for example by molding. The tread pattern elements comprise a contact surface intended to come into contact with the ground during rolling, lateral faces and delimiting cut-outs (especially, sipes); each intersection of each lateral face with the contact surface forms an edge corner which facilitates contact between the tire and the ground.

There are generally two types of the tread pattern elements. One is called as "block(s)" delimited by circumferential or axial groove(s), and the axial groove(s) is open to both sides of the circumferential grooves. Another is called as "rib(s)" delimited by circumferential groove(s) (optionally, and axial one(s)), and the axial groove(s) is not open to both sides of the circumferential grooves. Moreover, the tread pattern elements may comprise one or more sipes to form additional edge corners.

### Citation List

### Patent Literature

PTL 1: WO2013/087878

Generally, it is well known that rubber compositions of the tread, especially the edge corner(s), of the tire has a significant effect on tire grip performance on ground, particularly wet, snowy or icy. Thus, the patent application (Patent literature 1) filed by the present applicants, discloses a winter type tire particularly well suited to travel on snow-covered road, and the tread pattern elements respectively comprising at least one lateral face and a contact surface intended to come into contact with the ground during rolling, wherein the tread pattern elements comprise a base rubber composition (a first rubber composition (FC)) at least partially covered on at least one of the lateral face(s) with a layer of a covering composition (a second rubber composition (SC)) which is different from the first rubber composition and which comprises a specific formulation (for instance, a composition having a high glass transition temperature, or comprising high filler content or comprising high sulphur content) able to give such very rigid covering layer after vulcanization of the tire, and these tread pattern elements placed are favorable the grip on snow-covered ground.

However, it is always desirable for the skilled person to improve grip on wet ground, in particular under low temperature condition(s) with maintaining grip on snowy ground.

## Summary of Invention

### Technical Problem

Now, during their research, the inventors have discovered that a specific covering composition makes it possible to unexpectedly and substantially improve the grip on wet ground under low wet temperature condition(s) with maintaining the grip on snowy ground.

In the present description, unless expressly stated otherwise, all the percentages (%) indicated are percentages by weight (wt%).

The expression "elastomer matrix" is understood to mean, in a given composition, all of the elastomers present in said rubber composition.

The abbreviation "phr" signifies parts by weight per hundred parts by weight of the elastomer matrix in the considered rubber composition.

In the present description, unless expressly indicated otherwise, each $Tg_{DSC}$ (glass transition temperature) is

measured in a known way by DSC (Differential Scanning Calorimetry) according to Standard ASTM D3418-08.

Any interval of values denoted by the expression "between a and b" represents the range of values of greater than "a" and of less than "b" (i.e. the limits a and b excluded) whereas any interval of values denoted by the expression "from a to b" means the range of values going from "a" to "b" (i.e. including the strict limits a and b).

The expression "based on" should be understood in the present application to mean a composition comprising the mixture(s) and/or the product of the reaction of the various constituents used, some of the constituents being able or intended to react together, at least partly, during the various manufacturing phases of the composition, in particular during the vulcanization (curing).

As a tire has a geometry of revolution about an axis of rotation, the geometry of the tire is generally described in a meridian plane containing the axis of rotation of the tire, and the following definitions of directions of the tire are understood in the present application:

- A radial direction is a direction perpendicular to the axis of rotation of the tire;
- An axial direction is a direction parallel to the axis of rotation of the tire;
- A circumferential direction is a direction perpendicular to the meridian plane.

A plane being perpendicular to the axis of rotation of the tire and passing through the middle of a tread surface of the tire is referred to as an equatorial plane of the tire.

In what follows, expressions "radially", "axially" and "circumferentially" respectively mean "in the radial direction", "in the axial direction" and "in the circumferential direction". Expressions "radially on the inside (radially inner or radially internal), or respectively radially on the outside (radially outer or radially external)" mean "closer or, respectively, further away, from the axis of rotation of the tire, in the radial direction, than". Expressions "axially on the inside (axially inner or axially interior) or respectively axially on the outside (axially outer or axially exterior)" mean "closer or, respectively further away, from the equatorial plane, in the axial direction, than". Respective dimensions of a given element in the radial, axial and circumferential directions will also be denoted "radial thickness or height", "axial width" and "circumferential length" of this element. Expression "laterally" means "in the circumferential or axial direction".

**Solution to Problem**

A first aspect of the invention is a tire comprising a tread which comprises a plurality of tread pattern elements (1) delimited by cut-outs (3, 4);
the tread pattern elements (1) respectively comprising at least one lateral face (13, 14, 15, 16) and a contact surface (2) intended to come into contact with the ground during rolling;
the tread pattern elements (1) respectively comprising a first rubber composition (FC) at least partially covered on at least one of the lateral face(s) with a layer of a second rubber composition (SC) which is different from the first rubber composition (FC), the tire, being characterized in that the second rubber composition (SC) is based on:

- an elastomer matrix comprising between 40 and 70 phr, preferably between 50 and 70 phr, more preferably equal to or more than 55 phr and less than 70 phr, of a first diene elastomer which is polyisoprene(s) and between 30 and 60 phr, preferably between 30 and 50 phr, more preferably more than 30 phr and equal to or less than 45 phr, of a second diene elastomer which is styrene-butadiene copolymer(s), preferably solution styrene-butadiene copolymer(s) which is a copolymer of butadiene and styrene, prepared in solution;
- a reinforcing filler comprising more than 100 phr, notably between 100 and 140 phr, of a reinforcing inorganic filler; and
- a plasticizing agent comprising more than 30 phr, notably between 30 and 60 phr, of hydrocarbon resin(s) having a glass transition temperature of more than 20°C, preferably more than 30°C, more preferably more than 40°C, still more preferably more than 45°C, particularly at least 50°C, and comprising no liquid plasticizer(s) or less than 30 phr, preferably equal to or less than 25 phr, of liquid plasticizer(s), that is, the plasticizing agent optionally comprising 0 phr to less than 30 phr, preferably 0 to 25 phr, of liquid plasticizer(s).

The tire(s) of the invention are particularly intended to be equipped to passenger motor vehicles, including 4×4 (four-wheel drive) vehicles and SUV (Sport Utility Vehicles) vehicles, and also industrial vehicles in particular selected from vans and heavy duty vehicles (for example, bus or heavy road transport vehicles (lorries, tractors, trailers)).

**Advantageous Effects of Invention**

The covering composition makes it possible to improve the grip performance of the tire on wet ground at low temperature(s) (for instance, around +8 °C) as well as high one(s) (for instance, around +25°C), in parallel to maintain the grip performance of the tire on snowy ground.

Each of the below aspect(s), the embodiment(s) and the variant(s) including each of the preferred range(s) and/or matter(s) may be applied to any one of the other aspect(s), the other embodiment(s) and the other variant(s) of the invention unless expressly stated otherwise.

**Brief Description of Drawings**

Other characteristics and advantages of the present invention arise from the description made hereafter in reference to the annexed drawings which schematically show (in particular not to a specific scale), as nonrestrictive examples, of the embodiments of the object of the present invention.

In these drawings:

[fig. 1] FIG. 1 depicts a partial plan view of blocks as tread pattern elements (1) of a tread of a tire according to the present invention;

[fig.2]FIG. 2 shows the blocks of FIG. 1 in the cross section on the line of section II-II.

**Description of Embodiments**

The annexed FIG. 1 represents a partial plan view of four rectangular blocks as a plurality of tread pattern elements (1) of a tread of a tire according to the present invention. Each of the blocks is delimited by cut-outs (3, 4). The cut-outs are grooves (3) circumferentially extending and the other grooves (4) axially extending. Each of the blocks comprises four lateral faces (13, 14, 15, 16) and a contact surface (2) intended to come into contact with ground during the tire rolling. Each of the blocks has a length (L1) on a circumferential direction of the tire, and a width (L2) on an axial direction of the tire. Intersections of the lateral faces (13, 14, 15, 16) with the contact surface (2) form four edge corners (23, 24, 25, 26) which play important portions when driving particularly on a slippery road surface, notably through the presence of water, snow or ice.

The FIG. 2 presents the two blocks in the cross section taken along the line of section II-II of FIG. 1. The cross section is perpendicular to the axial direction of the tire.

In these figures, each of the blocks comprises a first rubber composition (FC: a mixture of base material), completely in this case, covered with a layer of a second rubber composition (SC: a mixture of covering material or a covering composition) on the four lateral faces (13, 14, 15, 16) bounding the grooves (3, 4) circumferentially (3) or axially extending (3, 4). The second rubber composition (SC) is different from the first rubber composition (FC). The layer of the second rubber composition (SC) has a thickness (E1) that is substantially constant (over an entire height (Hr) of covering, in this instance equal to a depth (H) of the grooves). Then, the depth (H) of the grooves is equal to a height of the blocks.

According to a preferred embodiment of the present invention, the lateral faces (14, 16, 24, 26) have orientations which are perpendicular to the circumferential direction of the tire, preferably the layer of the second rubber composition (SC) covers on the lateral faces (14, 16, 24, 26) which have orientations which are perpendicular to the circumferential direction of the tire in order to improve a grip on wet, snowy or icy ground(s).

According to a preferred embodiment of the present invention, the second rubber composition extends, in a new condition of the tire, as far as the edge corners (23, 24, 25, 26) formed by a boundary between the contact surface (2) and the lateral faces (13, 14, 15, 16) of the tread pattern elements (1).

According to a preferred embodiment of the present invention, the thickness (E1) is greater than 0.1 mm, preferably greater than 0.2 mm, more preferably between 0.2 mm and 4.0 mm. For the tires intended to be equipped to passenger motor vehicles, El is particularly between 0.3 mm and 1.0 mm.

The first rubber composition (FC) can be a conventional rubber composition which may be based on at least one diene elastomer (typically 50 to 100 phr of a diene elastomer selected from the group consisting of natural rubber, synthetic polyisoprenes, polybutadienes, butadiene copolymers, isoprene copolymers and the mixtures thereof), between 50 and 200 phr of a reinforcing filler (for instance, silica and/or carbon black), more than 30 phr of a plasticizing agent (for instance, liquid plasticizer(s) and/or hydrocarbon resin(s)) and a crosslinking system (not counting other usual additives).

The second rubber composition (SC) is different from the first rubber composition (FC), and is a specific rubber composition which will be described in details below.

Elastomer (or loosely "rubber", the two terms being regarded as synonyms) of the "diene" type is to be understood in a known manner as an (meaning one or more) elastomer derived at least partly (i.e. a homopolymer or a copolymer) from diene monomers (monomers bearing two carbon-carbon double bonds, conjugated or not).

These diene elastomers can be classified into two categories: "essentially unsaturated" or "essentially saturated". Generally, the expression "essentially unsaturated" is understood to mean a diene elastomer resulting at least in part from conjugated diene monomers having a content of units of diene origin (conjugated dienes) which is greater than

15% (mol %); thus it is that diene elastomers such as butyl rubbers or diene/$\alpha$ -olefin copolymers of the EPDM type do not fall under the preceding definition and may especially be described as "essentially saturated" diene elastomers (low or very low content of units of diene origin, always less than 15%). In the category of "essentially unsaturated" diene elastomers, the expression "highly unsaturated" diene elastomer is understood to mean in particular a diene elastomer having a content of units of diene origin (conjugated dienes) which is greater than 50%.

The second rubber composition (SC) of the tire according to the invention is based on between 40 and 70 phr, preferably between 50 and 70 phr, more preferably equal to or more than 55 phr and less than 70 phr, of a first diene elastomer which is polyisoprene(s).

According to a preferred embodiment of the invention, the first diene elastomer may be selected from the group consisting of synthetic polyisoprenes (IRs), natural rubber (NR) and the mixtures thereof. The synthetic polyisoprene(s) may be synthetic cis-1,4-polyisoprene(s), preferably having a content (mol %) of cis-1,4-units of greater than 90%, more preferably of greater than 98%.

A second aspect of the invention is the tire according to the first aspect, wherein the first diene elastomer comprise more than 50% by weight, preferably 100% by weight, of natural rubber per 100% by weight of the first diene elastomer.

The second rubber composition (SC) of the tire according to the invention is based on between 30 and 60 phr, preferably between 30 and 50 phr, more preferably equal to or more than 30 phr and less than 45 phr, of a second diene elastomer which is styrene-butadiene copolymer(s) (SBR(s)).

According to a preferred embodiment of the invention, the second diene elastomer may be selected from the group consisting of solution SBR(s) ("SSBR(s)"), emulsion SBR(s) ("ESBR(s)") and the mixtures thereof, preferably solution SBR(s) ("SSBR(s)") which is a copolymer of butadiene and styrene, prepared in solution.

A third aspect of the invention is the tire according to the first or the second aspect, wherein the second diene elastomer is styrene-butadiene copolymer(s) exhibiting a glass transition temperature of more than -40°C, preferably between -40 and -20°C, more preferably between -40 and -25°C, still more preferably between -35 and -25°C.

A fourth aspect of the invention is the tire according to any one of the first to the third aspects, wherein the second diene elastomer is styrene-butadiene copolymer(s) having a styrene content of more than 40%, notably between 40 and 70%, preferably between 40 and 60%, more preferably between 40 and 50%.

A fifth aspect of the invention is the tire according to any one of the first to the fourth aspects, wherein the total content of the first diene elastomer and the second diene elastomer is 85 to 100 phr, preferably 90 to 100 phr, more preferably 95 to 100 phr, still more preferably 100 phr.

According to an embodiment of the fifth aspect, second rubber composition (SC) may be based on an additional elastomer which is different from the first diene elastomer and the second diene elastomer. The content of additional elastomer may be equal to or less than 15 phr, preferably equal to or less than 10 phr and more preferably equal to or less than 5 phr. More preferably, the second rubber composition (SC) is not based on any additional elastomer. The additional elastomer may be selected from any elastomer known to a person skilled in the art. By way of example, the additional elastomer may be a diene rubber of the type of those commonly used in tires, such as, for example, polybutadiene(s), isoprene copolymer(s) and others.

A sixth aspect of the invention is the tire according to any one of the first to the fifth aspects, wherein the elastomer matrix comprises between 50 and 60 phr, preferably equal to or more than 55 phr and less than 60 phr, of the first diene elastomer and between 40 and 50 phr, preferably more than 40 phr and equal to or less than 45 phr, of the second diene elastomer.

The second rubber composition (SC) of the tire according to the invention is based on a reinforcing filler that comprises more than 100 phr, notably 100 and 140 phr, of a reinforcing inorganic filler (for example, silica). The reinforcing filler can reinforce the rubber composition, and the reinforcing filler may further comprise a reinforcing organic filler (for example, carbon black).

According to a preferred embodiment of the invention, in the second rubber composition (SC), the reinforcing filler may predominately comprise the reinforcing inorganic filler, that means the reinforcing filler may comprise more than 50% by weight of the reinforcing inorganic filler per 100% by weight of the total reinforcing filler. More preferably, the content of reinforcing inorganic filler is more than 60% by weight, still more preferably more than 70% by weight, particularly more than 80% by weight, more particularly more than 90% by weight, per 100% by weight of the total reinforcing filler.

A seventh aspect of the invention is the tire according to any one of the first to the sixth aspects, wherein the reinforcing filler comprises between 110 and 130 phr, preferably 115 to 125 phr, of the reinforcing inorganic filler.

The physical state under the presence of this filler is unimportant, whether it is in the form of powder, microbeads, granules, beads or any other suitable densified form. Of course, the reinforcing inorganic filler of the mixtures of various reinforcing inorganic fillers, preferably of highly dispersible siliceous and/or aluminous fillers is described hereafter.

Mineral fillers of the siliceous type, preferably silica ($SiO_2$) and/or the aluminous type, preferably alumina ($Al_2O_3$) are suitable in particular as the reinforcing inorganic fillers.

An eighth aspect of the invention is the tire according to any one of the first to the seventh aspects, wherein the reinforcing inorganic filler comprises more than 50% by weight, preferably 100% by weight, of silica per 100% by weight of the reinforcing inorganic filler. The reinforcing inorganic filler of the reinforcing filler in the second rubber composition (SC) may be comprises a type of silica or a blend of several silicas. The silica used may be any reinforcing silica known to a person skilled in the art, in particular any precipitated or pyrogenic silica having a BET surface area and a CTAB specific surface area that are both less than 450 $m^2/g$, preferably from 20 to 400 $m^2/g$. Such silica may be covered or not. Mention will be made, as low specific surface silica, of Sidistar R300 from Elkem Silicon Materials. Mention will be made, as highly dispersible precipitated silicas ("HDSs"), for example, of "Ultrasil 7000" and "Ultrasil 7005" from Evonik, "Zeosil 1165 MP", "Zeosil 1135 MP" and "Zeosil 1115 MP" from Rhodia, "Hi-Sil EZ150G" from PPG, "Zeopol 8715", "Zeopol 8745" and "Zeopol 8755" from Huber or the silicas with a high specific surface area as described in a patent application WO 03/016387. Mention will be made, as pyrogenic silicas, for example, of "CAB-O-SIL S-17D" from Cabot, "HDK T40" from Wacker, "Aeroperl 300/30", "Aerosil 380", "Aerosil 150" or "Aerosil 90" from Evonik. Such silica may be covered, for example, "CAB-O-SIL TS-530" covered with hexamethyldiasilazene or "CAB-O-SIL TS-622" covered with dimethyldichlorosilane from Cabot.

The reinforcing inorganic filler used, particularly in case of that it is silica, has a BET surface area and a CTAB specific surface area that are advantageously 50 to 350 $m^2/g$, more advantageously 100 to 300 $m^2/g$, still more preferably between 150 and 250 $m^2/g$.

The BET surface area is measured according to a known method, that is, by gas adsorption using the Brunauer-Emmett-Teller method described in "The Journal of the American Chemical Society", Vol. 60, page 309, February 1938, and more specifically, in accordance with the French standard NF ISO 9277 of December 1996 (multipoint volumetric method (5 points); where gas: nitrogen, degassing: 1 hour at 160°C, relative pressure range p/po: 0.05 to 0.17). The CTAB specific surface area is determined according to the French standard NF T 45-007 of November 1987 (method B).

A person skilled in the art will understand that a reinforcing filler of another nature, in particular organic nature, such as carbon black, might be used as filler equivalent to the reinforcing inorganic filler described in the present section, provided that this reinforcing filler is covered with an inorganic layer, such as silica, or else comprises, at its surface, functional sites, in particular hydroxyls, requiring the use of a coupling agent in order to form the connection between the filler and the elastomer. By way of example, mention may be made of carbon blacks for tires, such as described in patent applications WO 96/37547 and WO 99/28380.

A ninth aspect of the invention is the tire according to any one of the first to the eighth aspects, wherein the reinforcing filler comprises no carbon black or less than 20 phr of carbon black, that is, the reinforcing filler optionally comprises 0 phr to less than 20 phr of carbon black.

A tenth aspect of the invention is the tire according to the ninth aspect, wherein the reinforcing filler comprises no carbon black or less than 10 phr, preferably less than 5 phr, of carbon black, that is, the reinforcing filler optionally comprises 0 phr to less than 10 phr, preferably 0 phr to less than 5 phr, of carbon black.

In order to couple the reinforcing inorganic filler to the elastomer matrix, for instance, the diene elastomer, use can be made, in a known manner, of a coupling agent (or bonding agent) intended to provide a satisfactory connection, of chemical and/or physical nature, between the reinforcing inorganic filler (surface of its particles) and the elastomer matrix, for instance, the diene elastomer. This coupling agent is at least bifunctional. Use can be made in particular of at least bifunctional organosilanes or polyorganosiloxanes.

Use can be made in particular of silane polysulphides, referred to as "symmetrical" or "asymmetrical" depending on their particular structure, as described, for example, in applications WO 03/002648, WO 03/002649 and WO2004/033548.

Particularly suitable silane polysulphides correspond to the following general formula (I):

(I) Z - A - Sx - A - Z , in which:

- x is an integer from 2 to 8 (preferably from 2 to 5);
- A is a divalent hydrocarbon radical (preferably, $C_1$-$C_{18}$ alkylene groups or $C_6$-$C_{12}$ arylene groups, more particularly $C_1$-$C_{10}$, in particular $C_1$-$C_4$, alkylenes, especially propylene);
- Z corresponds to one of the formulae below:

[Chem.1]

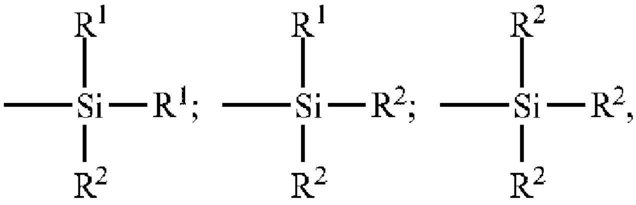

in which:

- the $R^1$ radicals which are unsubstituted or substituted and identical to or different from one another, represent a $C_1$-$C_{18}$ alkyl, $C_5$-$C_{18}$ cycloalkyl or $C_6$-$C_{18}$ aryl group (preferably, $C_1$-$C_6$ alkyl, cyclohexyl or phenyl groups, in particular $C_1$-$C_4$ alkyl groups, more particularly methyl and/or ethyl),
- the $R^2$ radicals which are unsubstituted or substituted and identical to or different from one another, represent a $C_1$-$C_{18}$ alkoxyl or $C_5$-$C_{18}$ cycloalkoxyl group (preferably a group selected from $C_1$-$C_8$ alkoxyls and $C_5$-$C_8$ cycloalkoxyls, more preferably a group selected from $C_1$-$C_4$ alkoxyls, in particular methoxyl and ethoxyl), are suitable in particular, without limitation of the above definition.

In the case of a mixture of alkoxysilane polysulphides corresponding to the above formula (I), in particular normal commercially available mixtures, the mean value of the "x" indices is a fractional number preferably of between 2 and 5, more preferably of approximately 4. However, the present invention can also advantageously be carried out, for example, with alkoxysilane disulphides (x = 2).

Mention will more particularly be made, as examples of silane polysulphides, of bis(($C_1$-$C_4$)alkoxyl($C_1$-$C_4$)alkylsilyl($C_1$-$C_4$)alkyl)polysulphides (in particular disulphides, trisulphides or tetrasulphides), such as, for example, bis(3-trimethoxysilylpropyl) or bis(3-triethoxysilylpropyl)polysulphides. Use is in particular made, among these compounds, of bis(3-triethoxysilylpropyl)tetrasulphide, abbreviated to TESPT, of formula $[(C_2H_5O)_3Si(CH2)_3S_2]_2$, or bis(3-triethoxysilylpropyl)disulphide, abbreviated to TESPD, of formula $[(C_2HSO)_3\ Si(CH_2)_3S]_2$. Mention will also be made, as preferred examples, of bis(mono($C_1$-$C_4$ )alkoxyldi($C_1$-$C_4$)alkylsilylpropyl)polysulphides (in particular disulphides, trisulphides or tetrasulphides), more particularly bis(monoethoxydimethylsilylpropyl)tetrasulphide, as described in patent application WO 02/083782 (or US 7 217 751).

Mention will in particular be made, as coupling agent other than alkoxysilane polysulphide, of bifunctional POSs (polyorganosiloxanes) or of hydroxysilane polysulphides ($R^2$ = OH in the above formula (I)), such as described in patent applications WO 02/30939 (or US 6 774 255) and WO 02/31041 (or US 2004/051210), or of silanes or POSs carrying azodicarbonyl functional groups, such as described, for example, in patent applications WO 2006/125532, WO 2006/125533 and WO 2006/125534.

As examples of other silane sulphides, mention will be made, for example, of the silanes bearing at least one thiol (-SH) function (referred to as mercaptosilanes) and/or at least one blocked thiol function, such as described, for example, in patents or patent applications US 6 849 754, WO 99/09036, WO 2006/023815, WO 2007/098080, WO 2008/055986 and WO 2010/072685.

Of course, use could also be made of mixtures of the coupling agents described previously, as described in particular in the aforementioned patent application WO 2006/125534.

According to one preferred embodiment of the invention, the content of coupling agent may be preferably from 0.5 to 15% by weight per 100% by weight of the reinforcing inorganic filler, particularly silica.

According to one preferred embodiment of the invention, the second rubber composition (SC) of the tire according to the invention may be based on less than 20 phr (for example, between 2 and 20 phr), still more preferably less than 15 phr (for example, between 3 and 15 phr) of coupling agent.

The second rubber composition (SC) of the tire according to the invention is based on a plasticizing agent.

The plasticizing agent may comprise a liquid plasticizer(s), a hydrocarbon resin(s), or the mixtures thereof.

The plasticizing agent in the second rubber composition (SC) of the tire according to the invention comprises more than 30 phr, notably between 30 and 60 phr, of hydrocarbon resin(s) having a glass transition temperature of more than 20°C, preferably more than 30°C, more preferably more than 40°C, still more preferably more than 45°C, particularly at least 50°C, as described for example in applications WO 2005/087859, WO 2006/061064 or WO 2007/017060.

An eleventh aspect of the invention is the tire according to any one of the first to the tenth aspects, wherein the plasticizing agent comprises between 35 and 55 phr, preferably between 40 and 50 phr, of the hydrocarbon resin(s).

In a manner known to a person skilled in the art, the designation "resin" is reserved in the present application, by definition, for a compound which is solid at ambient temperature (20°C under atmosphere pressure), in contrast to a liquid plasticizing compound, such as an oil.

The hydrocarbon resin(s) are polymer well known by a person skilled in the art, which are essentially based on carbon and hydrogen, and thus miscible by nature in rubber composition(s), for instance diene elastomer composition(s). They can be aliphatic or aromatic or also of the aliphatic/aromatic type, that is to say based on aliphatic and/or aromatic monomers. They can be natural or synthetic and may or may not be petroleum-based (if such is the case, also known under the name of petroleum resins). They are preferably exclusively hydrocarbon, that is to say, that they comprise only carbon and hydrogen atoms.

Preferably, the hydrocarbon resins as being "plasticizing" exhibit at least one, more preferably all, of the following characteristics:

- a $Tg_{DSC}$ of above 20°C (for example, between 20°C and 100°C), preferably above 30°C (for example, between 30°C and 100°C), more preferably above 40°C (for example, between 40°C and 100°C), still more preferably above 45°C (for example, between 45°C and 100°C), particularly at least 50°C (for example, at least 50°C and less than 100°C);
- a number-average molecular weight (Mn) of between 400 and 2000 g/mol (more preferably between 500 and 1500 g/mol);
- a polydispersity index (PI) of less than 3, more preferably less than 2 (reminder: PI = Mw/Mn with Mw the weight-average molecular weight).

The macrostructure (Mw, Mn and PI) of the hydrocarbon resins is determined by steric exclusion chromatography (SEC): solvent tetrahydrofuran; temperature 35°C; concentration 1 g/l; flow rate 1 ml/min; solution filtered through a filter with a porosity of 0.45 μm before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

A twelfth aspect of the invention is the tire according to any one of the first to the eleventh aspects, wherein the hydrocarbon resin(s) are selected from the group consisting of cyclopentadiene (abbreviated to CPD) homopolymer or copolymer resins, dicyclopentadiene (abbreviated to DCPD) homopolymer or copolymer resins, terpene homopolymer or copolymer resins, $C_5$ fraction homopolymer or copolymer resins, $C_9$ fraction homopolymer or copolymer resins, alpha-methyl styrene homopolymer or copolymer resins and the mixtures thereof. Use is more preferably made, among the above copolymer resins, of those selected from the group consisting of (D)CPD/ vinylaromatic copolymer resins, (D)CPD/terpene copolymer resins, (D)CPD/$C_5$ fraction copolymer resins, (D)CPD/$C_9$ fraction copolymer resins, terpene/vinylaromatic copolymer resins, terpene/phenol copolymer resins, $C_5$ fraction/vinyl-aromatic copolymer resins, $C_9$ fraction/vinylaromatic copolymer resins, and the mixtures thereof.

The term "terpene" combines here, in a known way, the α-pinene, β-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, α-methylstyrene, ortho-, meta- or para-methylstyrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a $C_9$ fraction (or more generally from a $C_8$ to $C_{10}$ fraction) are suitable, for example, as vinylaromatic monomer. Preferably, the vinylaromatic compound is styrene or a vinylaromatic monomer resulting from a $C_9$ fraction (or more generally from a $C_8$ to $C_{10}$ fraction). Preferably, the vinylaromatic compound is the minor monomer, expressed as molar fraction, in the copolymer under consideration.

The preferred resins above are well known to a person skilled in the art and are commercially available, for example:

- polylimonene resins: by DRT under the name "Dercolyte L120" (Mn=625 g/mol; Mw=1010 g/mol; PI=1.6; $Tg_{DSC}$=72°C) or by Arizona Chemical Company under the name "Sylvagum TR7125C" (Mn=630 g/mol; Mw=950 g/mol; PI=1.5; $Tg_{DSC}$=70°C);
- $C_5$ fraction/vinylaromatic, notably $C_5$ fraction/styrene or $C_5$ fraction/$C_9$ fraction, copolymer resins: by Neville Chemical Company under the names "Super Nevtac 78", "Super Nevtac 85" or "Super Nevtac 99", by Goodyear Chemicals under the name "Wingtack Extra", by Kolon under the names "Hikorez T1095" and "Hikorez T1100", or by Exxon under the names "Escorez 2101" and "ECR 373";
- limonene/styrene copolymer resins: by DRT under the name "Dercolyte TS 105" or by Arizona Chemical Company under the names "ZT115LT" and "ZT5100".

Mention may also be made, as examples of other preferred resins, of phenol-modifiedα-methylstirene resins. It should be remembered that, in order to characterize these phenol-modified resins, use is made, in a known way, of a number referred to as "hydroxyl number" (measured according to Standard ISO 4326 and expressed in mg KOH/g). α-Methylstirene resins, in particular those modified with phenol, are well known to a person skilled in the art and are

available commercially, for example sold by Arizona Chemical Company under the names "Sylvares SA 100" (Mn=660 g/mol; PI=1.5; $Tg_{DSC}$=53°C); "Sylvares SA 120" (Mn=1030 g/mol; PI=1.9; $Tg_{DSC}$=64°C); "Sylvares 540" (Mn=620 g/mol; PI=1.3; $Tg_{DSC}$=36°C; hydroxyl number=56 mg KOH/ g); and "Sylvares 600" (Mn=850 g/mol; PI=1.4; $Tg_{DSC}$=50°C; hydroxyl number=31 mg KOH/g).

The second rubber composition (SC) of the tire according to the invention is based on a plasticizing agent comprising no liquid plasticizer(s) or less than 30 phr, preferably equal or less than 25 phr, of liquid plasticizer(s), that is, the plasticizing agent optionally comprising 0 to less than 30 phr, preferably 0 to 25 phr, of liquid plasticizer(s).

A thirteenth aspect of the invention is the tire according to any one of the first to the twelfth aspects, wherein the plasticizing agent comprises between 10 and 30 phr, preferably 15 to 25 phr, of the liquid plasticizer(s).

The liquid plasticizer(s) are liquid at 20°C (under atmospheric pressure) by definition, their role is to soften the matrix by diluting the elastomer and the reinforcing filler; their $Tg_{DSC}$ is by definition less than -20°C, preferably less than -40°C.

A fourteenth aspect of the invention is the tire according to any one of the first to the thirteenth aspects, wherein a ratio by weight of the reinforcing filler to the liquid plasticizer is more than 3.5, preferably more than 4.0, more preferably more than 4.5, in order to make a good balance between rigidity and processability of the second rubber composition (SC).

Any extending oil, whether of aromatic or non-aromatic nature, any liquid plasticizing agent known for its plasticizing properties with regard to elastomer matrix(es), for instance, diene elastomers, can be used. At ambient temperature (20°C), these plasticizers or these oils, which are more or less viscous, are liquids (that is to say, as a reminder, substances that have the ability to eventually take on the shape of their container), as opposed, in particular, to plasticizing hydrocarbon resins which are by nature solid at ambient temperature.

A fifteenth aspect of the invention is the tire according to any one of the first to the fourteenth aspects, wherein the liquid plasticizers are selected from the group consisting of liquid diene polymers, polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers, phosphate plasticizers, sulphonate plasticizers and the mixtures thereof.

According to a preferred embodiment of the fifteenth aspect, the liquid plasticizer may be selected from the group consisting of MES oils, TDAE oils, naphthenic oils, vegetable oils and the mixtures thereof.

Mention may be made, as phosphate plasticizers for example, of those that contain between 12 and 30 carbon atoms, for example trioctyl phosphate. As examples of ester plasticizers, mention may especially be made of the compounds selected from the group consisting of trimellitates, pyromellitates, phthalates, 1,2-cyclohexane dicarboxylates, adipates, azelates, sebacates, triesters of glycerol, and mixtures thereof. Among the above triesters, mention may be made of glycerol triesters, preferably composed predominantly (for more than 50% by weight, more preferably for more than 80% by weight) of an unsaturated $C_{18}$ fatty acid, that is to say an unsaturated fatty acid selected from the group consisting of oleic acid, linoleic acid, linolenic acid and the mixtures thereof. More preferably, whether of synthetic origin or natural origin (in the case, for example, of sunflower or rapeseed vegetable oils), the fatty acid used is composed for more than 50% by weight, more preferably still from 80% by weight, of oleic acid. Such triesters (trioleates) comprising a high content of oleic acid are well known; for example they have been described in Application WO 02/088238, as the liquid plasticizers in treads for tires.

If the liquid plasticizer used comprises a petroleum oil, the petroleum oil is preferably a non-aromatic petroleum oil. A liquid plasticizer is described as non-aromatic when it has a content of polycyclic aromatic compounds, determined with the extract in DMSO according to the IP 346 method, of less than 3% by weight, relative to the total weight of the plasticizer. Therefore, use may be made of a liquid plasticizer selected from the group consisting of MES oils, TDAE oils, naphthenic oils (of low or high viscosity, in particular which are hydrogenated or non-hydrogenated), paraffinic oils and the mixtures thereof. Also suitable as petroleum oils are RAE oils, TRAE oils and SRAE oils or the mixtures thereof, which contain low contents of polycyclic compounds.

According to a preferred embodiment of the invention, the second rubber composition (SC) may be based on between 40 and 100 phr, preferably between 40 and 90 phr, more preferably between 40 and 80 phr, of the plasticizing agent.

According to a preferred embodiment of the invention, the first rubber composition (FC) may be based on preferably equal to or more than 30 phr, preferably equal to or more than than 40 phr of the liquid plasticizer, in contrast to the second rubber composition (SC).

The second rubber composition (SC) according to the invention may be based on all or a portion(s) of the usual additives generally used in the elastomer compositions intended for the manufacture of treads for tires, such as, for example, pigments, protection agents, such as antiozone waxes, chemical antiozonants, antioxidants, an-tifatigue agents, reinforcing resins, such as methylene acceptors (for example phenolic novolac resin) or methylene donors (for example HMT or H3M), a crosslinking system based either on sulphur or on donors of sulphur and/or peroxide and/or bismaleimides, vulcanization accelerators, or vulcanization activators.

The second rubber composition (SC) can be also based on coupling activators when a coupling agent is used, agents for covering the reinforcing inorganic filler or generally processing aids capable, in a known way, by virtue of an improvement in the dispersion of the filler in the rubber matrix and of a lowering of the viscosity of the second rubber composition (SC), of improving their property of processing in the raw state; these agents are, for example, hydrolysable silanes, such as alkylalkoxysilanes, polyols, polyethers, amines, or hydroxylated or hydrolysable polyorganosiloxanes.

The second rubber composition (SC) according to the invention are manufactured in appropriate mixers using two successive preparation phases according to a general procedure well known to a person skilled in the art: a first phase of thermomechanical working or kneading (referred to a as "non-productive" phase) at high temperature, up to a maximum temperature of between 110°C and 190°C, preferably between 130°C and 180°C, followed by a second phase of mechanical working (referred to as "productive" phase) at a lower temperature, typically of less than 110°C, for example between 40°C and 100°C, finishing phase during which the crosslinking or vulcanization system is incorporated.

A process which can be used for the manufacture of the second rubber composition (SC) comprises, for example and preferably, the following steps:

- incorporating in the elastomer matrix, for instance, the diene elastomer(s), in a mixer, the reinforcing filler, the plasticizing agent, during a first stage ("non productive" stage) everything being kneaded thermomechanically, in one or more goes, until a maximum temperature of between 110°C and 190°C is reached;
- cooling the combined mixture to a temperature of less than 100°C;
- subsequently incorporating, during a second stage ("productive" stage), a crosslinking system;
- kneading everything up to a maximum temperature of less than 110°C.

By way of example, the first (non-productive) phase is carried out in a single thermomechanical stage during which all the necessary constituents are introduced into an appropriate mixer, such as a standard internal mixer, followed, in the second step, for example after kneading for 1 to 2 minutes, by the other additives, optional additional filler-covering agents or processing aids, with the exception of the crosslinking system. The total kneading time, in this non-productive phase, is preferably between 1 and 15 min.

After cooling the mixture thus obtained, the crosslinking system is then incorporated at low temperature (for example, between 40°C and 100°C), generally in an external mixer, such as an open mill; The combined mixture is then mixed (the second (productive) phase) for a few minutes, for example between 2 and 15 min.

The crosslinking system is preferably based on sulphur and on a primary vulcanization accelerator, in particular on an accelerator of sulphenamide type. Added to this vulcanization system are various known secondary accelerators or vulcanization activators, such as zinc oxide, stearic acid, guanidine derivatives (in particular diphenylguanidine), and the like, incorporated during the first non-productive phase and/or during the productive phase.

The content of sulphur is preferably between 0.5 and 5.0 phr, and that of the primary accelerator is preferably between 0.5 and 8.0 phr.

Use may be made, as accelerator (primary or secondary) of any compound capable of acting as accelerator of the vulcanization of elastomer matrix, for instance, diene elastomers in the presence of sulphur, in particular accelerators of the thiazoles type and their derivatives, accelerators of thiurams types, or zinc dithiocarbamates. These accelerators are more preferably selected from the group consisting of 2-mercaptobenzothiazyl disulphide (abbreviated to "MBTS"), N-cyclohexyl-2-benzothiazole sulphenamide (abbreviated to "CBS"), N,N-dicyclohexyl-2 benzothiazolesulphenamide ("DCBS"), N-tert-butyl-2-benzothiazolesulphenamide ("TBBS"), N-tert-butyl-2 benzothiazolesulphenimide ("TBSI"), zinc dibenzyldithio-carbamate ("ZBEC"), Tetrabenzylthiuram disulfide ("TBZTD") and the mixtures thereof.

The second rubber composition (SC) thus obtained is subsequently calendered, for example in the form of a sheet or of a plaque, in particular for laboratory characterization, or else extruded in the form of a rubber profiled element which can be used directly the covering layer as portion(s) of the tread pattern elements (1) of the tread of the tire according to the present invention.

The vulcanization (or curing) is carried out in a known way at a temperature generally of between 110°C and 190°C for a sufficient time which can vary, for example, between 5 and 90 min depending in particular on the curing temperature, the adopted vulcanization system and the vulcanization kinetics of the second rubber composition (SC) under consideration.

A sixteenth aspect of the invention is the tire according to any one of the first to the fifteenth aspects, wherein the dynamic shear modulus G*, which is subjected to an alternating maximum stress of 0.7 MPa, at a frequency of 10 Hz and at a temperature of -10°C, of the second rubber composition (SC), in the vulcanized state, is more than 100 MPa (and less than 600 MPa), preferably more than 150 MPa (and less than 500 MPa), more preferably equal to or more than 200 MPa (and equal to or less than 300 MPa) in order to obtain satisfactory snow traction performance (in parallel to obtain satisfactory wet grip performance).

In contrast, dynamic shear modulus G*, which is subjected to an alternating maximum stress of 0.7 MPa, at a frequency of 10 Hz and at a temperature of -10°C, of the first rubber composition (FC), in the vulcanized state, is preferably

less than 20 MPa, more preferably less than 10 MPa, still more preferably less than 5 MPa.

The dynamic shear modulus G* means complex modulus G* defined as being the absolute value of a complex sum of elastic modulus G' and viscous modulus G":

[Math.1]

$$G^* = \sqrt{G'^2 + G"^2}$$

The elastic modulus (G') and the viscous modulus (G") denote dynamic properties well known to a person skilled in the art. These properties are measured on a Metravib VA4000 type viscoanalyzer on test specimens molded from unvulcanized compositions. Test specimens such as those described in the standard ASTM D 5992-96 (the version published in September 2006, initially approved in 1996), Figure X2.1 (circular embodiment) are used. The diameter "d" of the test specimen is 10 mm (so it therefore has a circular cross section of 78.5 $mm^2$), the thickness "L" of each of the portions of rubber composition is 2 mm, which gives a "d/L" ratio of 5 (unlike in the ISO to standard 2856 mentioned in the ASTM standard at paragraph X2.4 which recommends a d/L value of 2). The response of a test specimen of vulcanized rubber composition subjected to simple alternating sinusoidal shear stresses at a frequency of 10 Hz is recorded. The test specimen is shear loaded sinusoidally at 10 Hz, with an imposed stress (0.7 MPa), symmetrically about its equilibrium position. The test specimen undergoes an accommodation cycle prior to measurement. The test specimen is then shear loaded sinusoidally at 10 Hz, at 100% deformation peak-peak, at an ambient temperature. The measurements are taken as the temperature increases at a gradient of 1.5°C per minute, from a temperature $T_{min}$ below a glass transition temperature (Tg) of the material, up to a temperature $T_{max}$ which may correspond to the rubber plateau of the material. The glass transition temperature (Tg) is a temperature measured on the maximum of a ratio (G'/G") which is tan delta. The glass transition temperature (Tg) can be obtained with the measurement of the above modulus (G' and G"). Before the temperature sweep from $T_{min}$ to $T_{max}$ is begun, the test specimen is stabilized at the temperature $T_{min}$ for 20 minutes in order to have a uniform temperature within the test specimen. The result exploited is the dynamic shear modulus of elasticity (G') and the viscous shear modulus (G") at selected temperatures.

A first step in a manufacture of the tread of the tire according to the present invention is to cover the first rubber composition (FC) with the layer of the second rubber composition (SC).

For example, the first step can be done with a method described in the aforementioned application WO 2013/087878, namely by impregnating a two-dimensional fiber assembly such a fabric or non-woven, or a three-dimensional fiber assembly as a felt, previously placed in the appropriate dimensions, with the second rubber composition (SC). This impregnation can be done for example by hot calendering, by press molding or by injection under pressure.

The presence of the fiber assembly impregnated with the second rubber composition (SC), allows to obtain an excellent cohesion of the layer of the second rubber composition (SC) before vulcanization of the tire and thus assist the layer of the second rubber composition (SC) to place on the first rubber composition (FC) during molding of the tire.

Of course, means other than the fiber assembly could be used to improve the cohesion and the placement of the layer of the second rubber composition (SC) in the raw state, such as a rigid metal sheet, cellulose fiber (for instance, paper, cardboard) or another polymer.

Of course, if such a fiber assembly, strip or other means, is used to help the laying of the second rubber composition (SC) to place on the first rubber composition (FC) during the manufacture of the tire according to the present invention, the second rubber composition (SC) can comprise the fiber assembly, the strip or the other means unless the fiber assembly, the strip or the other means is extracted before the curing of the tire.

Preferably, the fibers used are long fibers having a longest dimension of greater than 30 mm, more preferably of greater than 50 mm.

Any type of fibers, preferably fibers selected from the group consisting of textile fiber, mineral fiber and the mixtures thereof, can be used to the layer of the second rubber composition (SC) with sufficient tensile rigidity to facilitate the placement of layer of the second rubber composition during molding of the tire.

The textile fiber may be selected from the group consisting of natural origin fibers, synthetic fibers and the mixtures thereof. The natural origin fibers may be made an organic material selected from the group consisting of silk, cotton, bamboo, cellulose, wool and the mixtures thereof, preferably cotton, cellulose, wood and the mixtures thereof. The synthetic fibers may be made of a synthetic material selected from the group consisting of polyester, polyamide, carbon, aramid, polyethylene, polypropylene, polyacrylonitrile, polyimide, polysulfone, polyether sulfone, polyurethane, polyvinyl alcohol and the mixtures thereof.

The mineral fiber may be selected from the group consisting of glass fibers, basalt fiber and the mixtures thereof.

Then, one way of obtaining such a tread pattern is for example to cover the entirety of a green form of a tread comprising the first rubber composition (FC) with the layer of the second rubber composition (SC) of suitable thickness before molding the tread and the cut-outs. After molding, the second rubber composition (SC) on the contact surface

(2) can be left in place or alternatively eliminated by a mechanical means (notably by grinding).

Another way of industrially producing a tread of a tire according to the present invention may consist in applying, to the unvulcanized green form of the tire provided with a tread made of the first rubber composition (FC), thin strips of the second rubber composition (SC), as described in patent EP 0510550 (it is possible for the thin strips to be applied to the tread in the circumferential and/or axial direction(s)). Another way may consist in producing the tread by coextruding two (or more) compounds when the tread is extruded. It is still possible to operate as described in Figures 5-6 and paragraph IV-B of WO2013/087878.

After vulcanization of the tire of the present invention, the specific layer of the second rubber composition (SC) described above has the advantage of providing a very high stiffness at a low temperature (below 0 ° C) to the edges (23, 24, 25, 26) formed by the intersection of the contact surfaces (2) and the high rigidity lateral faces (13, 14, 15, 16), which is particularly favorable behavior of the tire on snowy ground, while giving the tire, thanks to the presence of the specific second rubber composition capable of improving wet grip performance of the tire at not only high, but also low wet temperatures.

A seventeenth aspect of the invention is the tire according to any one of the first to the sixteenth aspects, wherein the layer of the second rubber composition (SC) has a thickness (E1) which is more than 0.1mm, preferably more than 0.2 mm in order to get excellent grip on snow ground. More preferably, the thickness is between 0.2 and 4.0 mm, still more preferably between 0.3 and 1.0 mm in order to maintain an excellent behavior on snowy ground while at the same time limiting the extent to which grip on icy ground is penalized.

The present invention is further illustrated by the following non-limiting examples.

**Examples**

In the following tests, two tires (identified as T-0 (a reference) and T-1 (an example according to the invention)) having a dimension 225/45R17 (load index: 94) are compared. Each of tires comprises a tread which comprises a tread pattern element comprising a conventional rubber composition (as the first rubber composition (FC)). Each first rubber composition (FC) is covered with a layer of each second composition (identified as C-0 and C-1) which is reinforced with a silica (as a reinforcing inorganic filler) with a varying plasticizing agent comprising a hydrocarbon resin and a liquid plasticizer. Their formulations are given at Table 1 with the content of the various products expressed in phr.

- C-0 (in T-0): based on a styrene butadiene copolymer (SBR);
- C-1 (in T-1): based on a blend of a styrene butadiene copolymer (SBR) and natural rubber (NR) as a polyisoprene.

The reinforcing filler, its associated coupling agent, the plasticizing agent, the elastomer matrix and the various other ingredients, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasts in total approximately 3 to 4 minutes, until a maximum "dropping" temperature of 165°C was reached. The mixture thus obtained was recovered and cooled and then sulphur and an accelerator of sulphenamide type were incorporated on an external mixer (homofinisher) at 20 to 30°C, everything being mixed (productive phase) for an appropriate time (for example, between 5 and 12 min).

The rubber compositions thus obtained were subsequently calendered, either in the form of sheets (thickness of 2 to 3 mm) or of fine sheets of rubber, for the measurement of their physical or mechanical properties, or in the form of profiled elements which could be used directly, after cutting and/or assembling to the desired dimensions, for example as tire semi-finished products.

The dynamic share modulus G* of the second rubber compositions (C-0 and C-1), and the first rubber composition of the both tires (T-0 and T-1) when subjected to the alternating maximum stress of 0.7 MPa at the frequency of 10 Hz and a temperature of -10°C were 667 MPa (C-0), 200 MPa (C-1) and 2.7 MPa (the first rubber composition).

The two tires (T-0 and T-1) conventionally manufactured with a curing condition (typically, temperature: 160°C, pressure: 16 bar, and time: several tens of minutes) are identical in all points except for C-0 and C-1 as the second rubber compositions (SC) constituting the treads. The layers of the second rubber compositions (SC), which are applied to the first rubber composition (FC) as described in patent EP 050550, have a thickness (E1: 0.8 mm) on the circumferential direction of the tires, the height ($H_R$) of layers is at least 70% of the height (H) of axial grooves (4) of the tires on the radial direction of the tires. The average height ($H_R$) of layers is about 6.3 mm. The maximum of height (H) of axial grooves (4) is about 9.0 mm. The tires adopt substantially the structure described with the support of FIGs. 1 and 2.

The properties of test tires (T-0 and T-1) obtained from grip measurements on arbitrary suitable wet/snow conditions described in detail below are given in Table 2, a value greater than that of the reference (T-0), arbitrarily set at 100, indicating an improved result, i.e. an aptitude for a shorter braking distance.

The wet grip measurements were conducted on the test tires mounted on a trailer towed by a vehicle at wet

surface temperature = 8°C (low wet temperature condition, and 25°C (high wet temperature condition). Each of the measurements was in accordance with "UN/ECE (United Nations Economic Commission for Europe) Regulation No.117 revision 4 concerning the approval of tyres with regard to rolling sound emissions and/or to adhesion on wet surfaces and/or to rolling resistance", that is, on a straight path 1mm deep wet surface, braking force was applied to each of the test tires at speed of 65 km/h, and then peak $\mu$ level was calculated.

As the snow grip measurements, a 1,400 cc passenger car provided on all the four wheels with the same kind of test tires under 220 kPa of tire inflation pressure mounted onto 7.5Jx17 rim was run on a snow covered road at a temperature of about -10°C, and the deceleration from 50 to 5 km/h during sudden longitudinal braking while anti-lock braking system (ABS) activated was respectively measured. The above snow tests were conducted on a hard pack snow with a CTI penetrometer reading of about 90 in accordance with Standard ASTM F1805.

As an examination of the results in Table 2, the test tire according to the invention T-1 compared with the reference T-0 exhibits markedly improved wet grip at not only the high wet temperature, but also at the low wet temperature. Moreover, the test tire according to the invention T-1, reveals equivalent snow grip to that of the reference T-0.

In conclusion, the tire comprising the tread which comprises the tread pattern elements respectively comprising the first rubber composition (FC) covered on the lateral face(s) with the specific second rubber composition (SC) according to the present invention makes possible an improvement of grip on wet ground under low wet temperature condition(s) as well as high one(s) with maintaining grip on snowy ground.

[Table 1]

| | C-0 | C-1 |
|---|---|---|
| SBR 1 (1) | 100 | |
| SBR 2 (2) | | 45 |
| NR (3) | | 55 |
| Silica (4) | 120 | 120 |
| Coupling agent (5) | 9.6 | 9.6 |
| Hydrocarbon resin (6) | 25 | 45 |
| Liquid plasticizer (7) | 45 | 25 |
| Steric acid | 1 | 1 |
| Anti-ozone wax | 1.5 | 1.5 |
| Antioxidant (8) | 2 | 2 |
| DPG (9) | 3 | 3 |
| ZnO | 2.5 | 2.5 |
| Accelerator (10) | 1.7 | 1.7 |
| Sulphur | 2 | 2 |
| | | |
| Silica/Liquid plasticizer | 2.7 | 4.8 |

(1) SBR1: solution SBR with 44% of styrene units ($Tg_{DSC}$ = -12°C);
(2) SBR2: solution SBR with 41% of styrene units ($Tg_{DSC}$ = -28°C);
(3) NR: Natural rubber (peptised);
(4) Silica ("Zeosil1165MP" from Rhodia, CTAB, BET: about 160 $m^2/g$);
(5) Coupling agent TESPT ("Si69" from Evonik);
(6) Cycloaliphatic hydrocarbon resins (ESCOREZ5600, Exxon mobil, $Tg_{DSC}$=52°C);
(7) TDAE oil ("Vivatec 500" from the Hansen & Rosenthal company);
(8) N-(1,3-dimethylbutyl)-N-phenyl-para-phenylenediamine ("Santoflex 6-PPD" from Flexsys);
(9) Diphenylguanidine ("Perkacit DPG" from Flexsys);
(10) N-dicyclohexyl-2-benzothiazole sulphenamide ("Santocure CBS" from the company Flexsys).

[Table 2]

| | T-0 | T-1 |
|---|---|---|
| Wet grip at wet temperature = 8°C | 100 | 113 |
| Wet grip at wet temperature = 25°C | 100 | 106 |
| Snow grip | 100 | 100 |

## Claims

1. A tire comprising a tread which comprises a plurality of tread pattern elements (1) delimited by cut-outs (3, 4);
the tread pattern elements (1) respectively comprising at least one lateral face (13, 14, 15, 16) and a contact surface (2) intended to come into contact with the ground during rolling;
the tread pattern elements (1) respectively comprising a first rubber composition (FC) at least partially covered on at least one of the lateral face(s) with a layer of a second rubber composition (SC) which is different from the first rubber composition (FC), the tire, being **characterized in that** the second rubber composition (SC) based on:

   - an elastomer matrix comprising between 40 and 70 phr of a first diene elastomer which is polyisoprene(s) and between 30 and 60 phr of a second diene elastomer which is styrene-butadiene copolymer(s);
   - a reinforcing filler comprising more than 100 phr of a reinforcing inorganic filler; and
   - a plasticizing agent comprising more than 30 phr of hydrocarbon resin(s) having a glass transition temperature of more than 20°C, and comprising no liquid plasticizer(s) or less than 30 phr of liquid plasticizer(s).

2. The tire according to Claim 1, wherein the first diene elastomer comprises more than 50% by weight of natural rubber per 100% by weight of the first diene elastomer.

3. The tire according to Claim 1 or Claim 2, wherein the second diene elastomer is styrene-butadiene copolymer(s) exhibiting a glass transition temperature of more than -40°C.

4. The tire according to any one of Claims 1 to 3, wherein the second diene elastomer is styrene-butadiene copolymer(s) having a styrene content of more than 40%.

5. The tire according to any one of Claims 1 to 4, wherein the total content of the first diene elastomer and the second diene elastomer is 85 to 100 phr.

6. The tire according to any one of Claims 1 to 5, wherein the elastomer matrix comprises between 50 and 60 phr of the first diene elastomer and between 40 and 50 phr of the second diene elastomer.

7. The tire according to any one of Claims 1 to 6, wherein the reinforcing filler comprises between 110 and 130 phr of the reinforcing inorganic filler.

8. The tire according to any one of Claims 1 to 7, wherein the reinforcing inorganic filler comprises more than 50% by weight of silica per 100% by weight of the reinforcing inorganic filler.

9. The tire according to any one of Claims 1 to 8, wherein the reinforcing filler comprises no carbon black or less than 20 phr of carbon black, preferably wherein the reinforcing filler comprises no carbon black or less than 10 phr of carbon black.

10. The tire according to any one of Claims 1 to 9, wherein the plasticizing agent comprises between 35 and 55 phr of the hydrocarbon resin(s).

11. The tire according to any one of Claims 1 to 10, wherein the hydrocarbon resin(s) are selected from the group consisting of cyclopentadiene homopolymer or copolymer resins, dicyclopentadiene homopolymer or copolymer resins, terpene homopolymer or copolymer resins, $C_5$ fraction homopolymer or copolymer resins, $C_9$ fraction homopolymer or copolymer resins, alpha-methyl styrene homopolymer or copolymer resins, and the mixtures thereof.

12. The tire according to any one of Claims 1 to 11, wherein the plasticizing agent comprises between 10 and 30 phr

of the liquid plasticizer(s), preferably wherein a ratio by weight of the reinforcing filler to the liquid plasticizer is more than 3.5.

**13.** The tire according to any one of Claims 1 to 12, wherein the liquid plasticizers are selected from the group consisting of liquid diene polymers, polyolefinic oils, naphthenic oils, paraffinic oils, Distillate Aromatic Extracts (DAE) oils, Medium Extracted Solvates (MES) oils, Treated Distillate Aromatic Extracts (TDAE) oils, Residual Aromatic Extracts (RAE) oils, Treated Residual Aromatic Extracts (TRAE) oils, Safety Residual Aromatic Extracts (SRAE) oils, mineral oils, vegetable oils, ether plasticizers, ester plasticizers, phosphate plasticizers, sulphonate plasticizers and the mixtures thereof.

**14.** The tire according to any one of Claims 1 to 13, wherein the dynamic shear modulus G* of the first rubber composition when subjected to the alternating maximum stress of 0.7 MPa at the frequency of 10 Hz and a temperature of -10°C is between 100 and 600 MPa.

**15.** The tire according to any one of Claims 1 to 14, wherein the layer of the second rubber composition (SC) has a thickness (E1) which is more than 0.1mm.

## Patentansprüche

**1.** Reifen, der eine Lauffläche umfasst, die eine Vielzahl von Laufflächenmusterelementen (1) umfasst, die durch Ausschnitte (3, 4) begrenzt sind;
wobei die Laufflächenmusterelemente (1) jeweils mindestens eine Seitenfläche (13, 14, 15, 16) und eine Kontaktoberfläche (2) umfassen, die dazu bestimmt ist, beim Rollen mit dem Boden in Kontakt zu treten;
wobei die Laufflächenmusterelemente (1) jeweils eine erste Gummizusammensetzung (FC) umfassen, die mindestens teilweise auf mindestens einer der Seitenfläche(n) mit einer Schicht von einer zweiten Gummizusammensetzung (SC) bedeckt ist, die sich von der ersten Gummizusammensetzung (FC) unterscheidet, wobei der Reifen **dadurch gekennzeichnet, ist, dass** die zweite Gummizusammensetzung (SC) basiert ist auf:

- einer Elastomer-Matrix, die zwischen 40 und 70 phr eines ersten Dien-Elastomers umfasst, das Polyisopren (e) ist, und zwischen 30 und 60 phr eines zweiten Dien-Elastomers, das Styrol-Butadien-Copolymer(e) ist (sind);
- einen Verstärkungsfüllstoff, der mehr als 100 phr eines anorganischen Verstärkungsfüllers umfasst; und
- einen Weichmacher, der mehr als 30 phr an Kohlenwasserstoffharz(en) umfasst, das (die) eine Glasübergangstemperatur von mehr als 20 °C aufweist (- en), und keine(n) flüssigen Weichmacher oder weniger als 30 phr eines (von) flüssigen Weichmachers (-n) umfasst (-en).

**2.** Reifen nach Anspruch 1, wobei das erste Dien-Elastomer mehr als 50 Gew.-% an Naturkautschuk je 100 Gew.-% des ersten Dien-Elastomers umfasst.

**3.** Reifen nach Anspruch 1 oder Anspruch 2, wobei das zweite Dien-Elastomer Styrol-Butadien-Copolymer(e) ist (sind), die eine Glasübergangstemperatur von mehr als -40 °C vorweist (-en).

**4.** Reifen nach einem der Ansprüche 1 bis 3, wobei das zweite Dien-Elastomer Styrol-Butadien-Copolymer(e) ist (sind), die einen Styrol-Gehalt von mehr als 40 % aufweist (-en).

**5.** Reifen nach einem der Ansprüche 1 bis 4, wobei der Gesamtgehalt des ersten Dien-Elastomers und des zweiten Die-Elastomers 85 bis 100 phr beträgt.

**6.** Reifen nach einem der Ansprüche 1 bis 5, wobei die Elastomer-Matrix zwischen 50 und 60 phr des ersten Dien-Elastomers und zwischen 40 und 50 phr des zweiten Dien-Elastomers umfasst.

**7.** Reifen nach einem der Ansprüche 1 bis 6, wobei der Verstärkungsfüller zwischen 110 und 130 phr des anorganischen Verstärkungsfüllers umfasst.

**8.** Reifen nach einem der Ansprüche 1 bis 7, wobei der anorganische Verstärkungsfüller mehr als 50 Gew.-% an Siliciumdioxid je 100 Gew.-% des anorganischen Verstärkungsfüllers umfasst.

**9.** Reifen nach einem der Ansprüche 1 bis 8, wobei der Verstärkungsfüller keinen Ruß oder weniger als 20 phr an

Ruß umfasst, wobei der Verstärkungsfüller vorzugsweise keinen Ruß oder weniger als 10 phr an Ruß umfasst.

**10.** Reifen nach einem der Ansprüche 1 bis 9, wobei der Weichmacher zwischen 35 und 55 phr an Kohlenwasserstoffharz(en) umfasst.

**11.** Reifen nach einem der Ansprüche 1 bis 10, wobei das (die) Kohlenwasserstoffharz(e) aus der Gruppe ausgewählt ist (sind), die aus Cyclopentadien-Homopolymer- oder Copolymerharzen, Dicyclopentadien-Homopolymer- oder Copolymerharzen, Terpen-Homopolymer-oder Copolymerharzen, $C_5$-Fraktion-Homopolymer- oder Copolymerharzen, Cg-Fraktion-Homopolymer- oder Copolymerharzen, Alpha-Methylstyrol-Homopolymer- oder Copolymerharzen, und Gemischen daraus besteht.

**12.** Reifen nach einem der Ansprüche 1 bis 11, wobei der Weichmacher zwischen 10 und 30 phr des (der) flüssigen Weichmacher(s) umfasst, wobei ein Gewichtsverhältnis des Verstärkungsfüllers zum flüssigen Weichmacher vorzugsweise mehr als 3,5 beträgt.

**13.** Reifen nach einem der Ansprüche 1 bis 12, wobei die flüssigen Weichmacher aus der Gruppe ausgewählt sind, die aus flüssigen Dien-Polymeren, Polyolefinölen, Naphtenölen, Paraffinölen, aromatischen Extraktölen (DAE), milden Extraktionslösungsmittelölen (MES), Ölen aus behandeltem, destilliertem Aromenextrakt (TDAE), Ölen aus kennzeichnungsfreiem Spezialraffinat (RAE), Ölen aus behandeltem kennzeichnungsfreiem Spezialraffinat (TRAE), Ölen aus kennzeichnungsfreiem Sicherheitsspezialraffinat (SRAE), Mineralölen, Pflanzenölen, Etherweichmachern, Esterweichmachern, Phosphatweichmachern, Sulfonatweichmachern und Gemischen daraus besteht.

**14.** Reifen nach einem der Ansprüche 1 bis 13, wobei der dynamische Schubmodul G* der ersten Gummizusammensetzung, wenn sie der abwechselnden maximalen Beanspruchung von 0,7 MPa mit einer Frequenz von 10 Hz und einer Temperatur von -10 °C ausgesetzt ist, zwischen 100 und 600 MPa beträgt.

**15.** Reifen nach einem der Ansprüche 1 bis 14, wobei die Schicht der zweiten Gummizusammensetzung (SC) eine Docke (E1) aufweist, die mehr als 0,1 mm beträgt.

**Revendications**

**1.** Pneu comprenant une bande de roulement qui comprend une pluralité d'éléments de dessin de bande de roulement (1) délimités par des découpes (3, 4) ;
les éléments de dessin de bande de roulement (1) comprenant respectivement au moins une face latérale (13, 14, 15, 16) et une surface de contact (2) destinée à venir en contact avec le sol durant le roulement ;
les éléments de dessin de bande de roulement (1) comprenant respectivement une première composition de caoutchouc (FC) au moins partiellement couverte sur au moins une des faces latérales avec une couche d'une seconde composition de caoutchouc (SC) qui est différente de la première composition de caoutchouc (FC), le pneu, étant **caractérisé en ce que** la seconde composition de caoutchouc (SC) est basée sur :

- une matrice élastomère comprenant de 40 à 70 pce d'un premier élastomère de diène qui est un ou des polyisoprènes et de 30 à 60 pce d'un second élastomère de diène qui est un ou des copolymères de styrène-butadiène ;
- une charge de renforcement comprenant plus de 100 pce d'une charge de renforcement inorganique ; et
- un agent plastifiant comprenant plus de 30 pce de résine(s) hydrocarbonée(s) ayant une température de transition vitreuse supérieure à 20 °C, et ne comprenant pas de plastifiant liquide ou moins de 30 pce de plastifiant(s) liquide(s).

**2.** Pneu selon la revendication 1, dans lequel le premier élastomère de diène comprend plus de 50 % en poids de caoutchouc naturel pour 100 % du premier élastomère de diène.

**3.** Pneu selon la revendication 1 ou la revendication 2, dans lequel le second élastomère de diène est un ou des copolymères de styrène-butadiène présentant une température de transition vitreuse supérieure à -40 °C.

**4.** Pneu selon l'une quelconque des revendications 1 à 3, dans lequel le second élastomère de diène est un ou des copolymères de styrène-butadiène ayant une teneur en styrène supérieure à 40 %.

**5.** Pneu selon l'une quelconque des revendications 1 à 4, dans lequel la teneur totale en le premier élastomère de diène et le second élastomère de diène est de 85 à 100 pce.

**6.** Pneu selon l'une quelconque des revendications 1 à 5, dans lequel la matrice d'élastomère comprend de 50 à 60 pce du premier élastomère de diène et de 40 à 50 pce du second élastomère de diène.

**7.** Pneu selon l'une quelconque des revendications 1 à 6, dans lequel la charge de renforcement comprend de 110 à 130 pce de la charge de renforcement inorganique.

**8.** Pneu selon l'une quelconque des revendications 1 à 7, dans lequel la charge de renforcement inorganique comprend plus de 50 % en poids de silice pour 100 % en poids de la charge de renforcement inorganique.

**9.** Pneu selon l'une quelconque des revendications 1 à 8, dans lequel la charge de renforcement ne comprend pas de noir de carbone ou moins de 20 pce de noir de carbone, de préférence dans lequel la charge de renforcement ne comprend pas de noir de carbone ou moins de 10 pce de noir de carbone.

**10.** Pneu selon l'une quelconque des revendications 1 à 9, dans lequel l'agent plastifiant comprend de 35 à 55 pce de la ou des résines hydrocarbonées.

**11.** Pneu selon l'une quelconque des revendications 1 à 10, dans lequel la ou les résines hydrocarbonées sont sélectionnées dans le groupe consistant en des résines de copolymères ou d'homopolymères de cyclopentadiène, des résines de copolymères ou d'homopolymères de dicyclopentadiène, des résines de copolymères ou d'homopolymères de terpène, des résines de copolymères ou d'homopolymères de fraction $C_5$, des résines de copolymères ou d'homopolymères de fraction Cg, des résines de copolymères ou d'homopolymères d'alpha-méthyl styrène, et les mélanges de celles-ci.

**12.** Pneu selon l'une quelconque des revendications 1 à 11, dans lequel l'agent plastifiant comprend de 10 à 30 pce du ou des plastifiants liquides, de préférence dans lequel un rapport en poids de la charge de renforcement sur le plastifiant liquide est supérieur à 3,5.

**13.** Pneu selon l'une quelconque des revendications 1 à 12, dans lequel les plastifiants liquides sont sélectionnés dans le groupe consistant en les polymères de diène liquides, les huiles polyoléfiniques, les huiles naphténiques, les huiles paraffiniques, les huiles de type extrait aromatique de distillat (DAE), les huiles de type solvate extrait d'un milieu (MES), les huiles de type extrait aromatique de distillat traité (TDAE), les huiles de type extrait aromatique résiduel (RAE), les huiles de type extrait aromatique résiduel traité (TRAE), les huiles de type extrait aromatique résiduel de sécurité (SRAE), les huiles minérales, les huiles végétales, les plastifiants éther, les plastifiants ester, les plastifiants phosphate, les plastifiants sulfonate et les mélanges de ceux-ci.

**14.** Pneu selon l'une quelconque des revendications 1 à 13, dans lequel le module de cisaillement dynamique G* de la première composition de caoutchouc lorsqu'elle est soumise à une contrainte maximale alternée de 0,7 MPa à la fréquence de 10 Hz et à une température de -10 °C est comprise entre 100 et 600 MPa.

**15.** Pneu selon l'une quelconque des revendications 1 à 14, dans lequel la couche de la seconde composition de caoutchouc (SC) a une épaisseur (E1) qui est supérieure à 0,1 mm.

[Fig. 1]

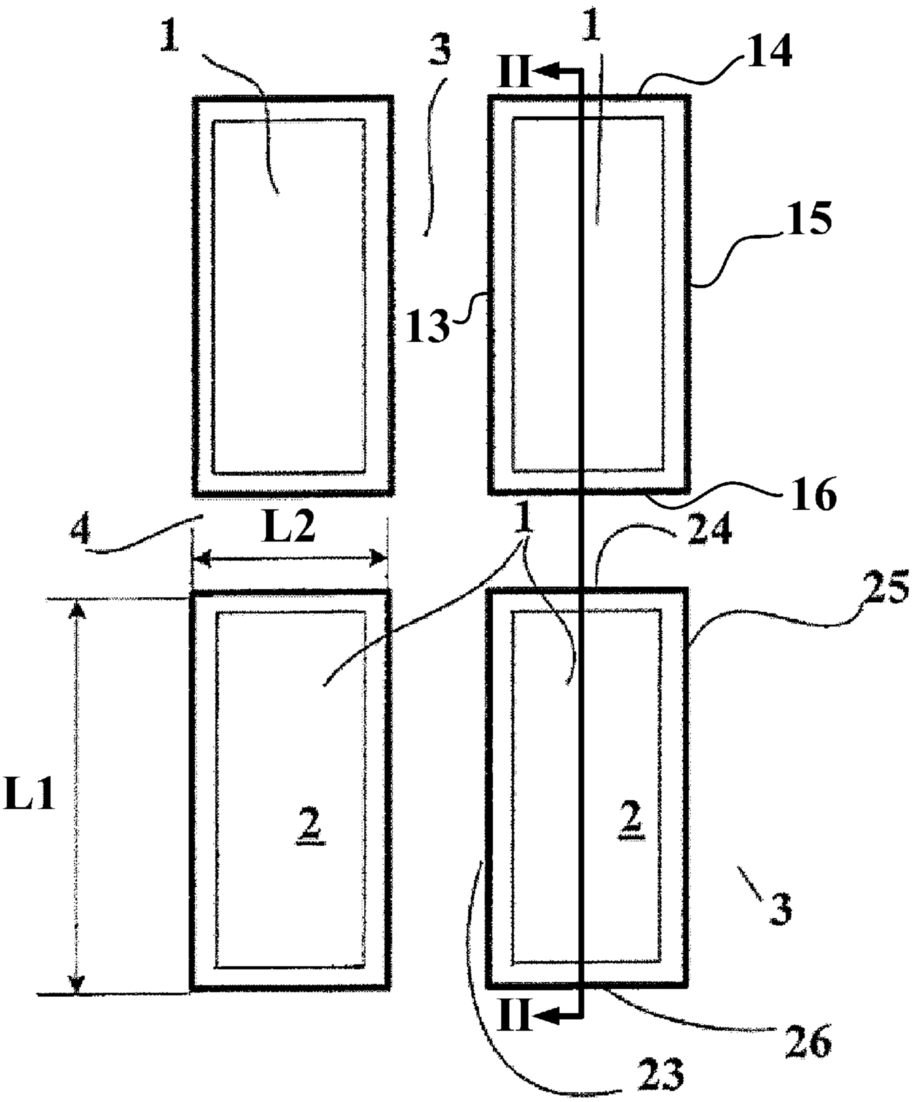
1
3
II
1
14
15
13
16
4
L2
1
24
25
L1
2
2
3
II
26
23

[Fig. 2]

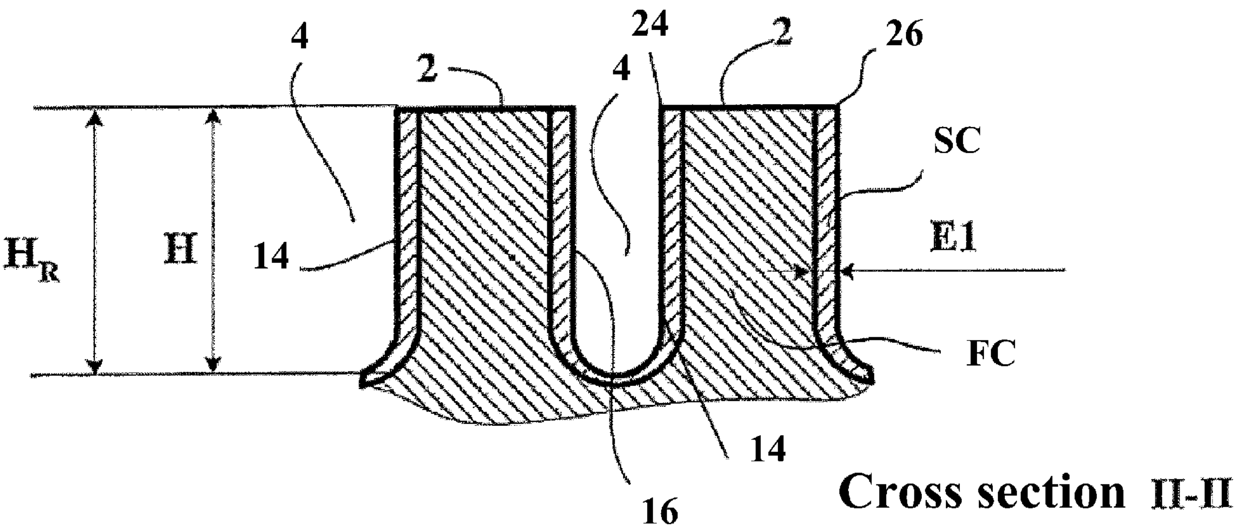
4
2
24
4
2
26
SC
$H_R$
H
14
E1
FC
14
16
Cross section II-II

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013087878 A
- WO 03016387 A
- WO 9637547 A
- WO 9928380 A
- WO 03002648 A
- WO 03002649 A
- WO 2004033548 A
- WO 02083782 A
- US 7217751 B
- WO 0230939 A
- US 6774255 B
- WO 0231041 A
- US 2004051210 A
- WO 2006125532 A
- WO 2006125533 A
- WO 2006125534 A
- US 6849754 B
- WO 9909036 A
- WO 2006023815 A
- WO 2007098080 A
- WO 2008055986 A
- WO 2010072685 A
- WO 2005087859 A
- WO 2006061064 A
- WO 2007017060 A
- WO 02088238 A
- EP 0510550 A
- EP 050550 A


### Non-patent literature cited in the description


- *The Journal of the American Chemical Society,* February 1938, vol. 60, 309